# EUROPEAN PATENT APPLICATION

(11) **EP 1 519 601 A2**
(43) Date of publication of application: **30.03.2005**
(21) Application number: 04255477.4
(22) Date of filing: 09.09.2004
(51) Int. Cl.: H04Q 7/36, H04L 12/28

(54) **System and method for brokering wireless communication resources**

(30) Priority: 24.09.2003 US 669933
(71) Applicant: Lucent Technologies Inc., Murray Hill, NJ 07974-0636 (US)
(72) Inventor: Beacken, Marc J., Randolph, NJ 07869 (US)
(74) Representative: Watts, Christopher Malcolm Kelway, Dr.

(57) **Abstract**

A system and method, operable with a wireless communication cell having at least one aperture array, for brokering wireless communication resources. In one embodiment, the system includes a virtual sector broker configured to generate, in response to a resource request, an allocation request based on available wireless communication resources of the cell subjected to a brokering process and an internal policy broker database associated with the virtual sector broker. The system further includes a virtual sector formation unit configured to employ the at least one aperture array to provide dynamic virtual sectorization of the available wireless communication resources in response to the allocation request.

## Description

### TECHNICAL FIELD OF THE INVENTION

The present invention is directed, in general, to wireless communication systems and, more specifically, to a system and method for brokering the resources of a wireless communication cell.

### BACKGROUND OF THE INVENTION

Wireless communications services have dramatically increased since their inception. This increase, however, has also required the construction of mass numbers of wireless basestation communication cell sites and associated towers with mounted sector antennae in order to provide cellular coverage to consumers of a particular service provider. In some cases, these towers are shared, and often owned, by an intermediary towering company. In most cases the basestations are owned and managed by a wireless service provider, as are the power amplifiers for transmit, receivers and their associated apertures. The apertures are typically comprised of multiple fixed sectorized (directional) antennas.

The traditional basestation processes baseband signals and performs up/down conversions to transmit and receive wireless communication signals. Each wireless communication cell footprint covers a certain fixed geographic area and is usually dedicated to a specific wireless service provider.

Each wireless service provider procures distinct spectrum and offers wireless service according to a number of standards. These standards differ in their spectral occupancy, modulation technique, access methods, etc. The wireless service providers often occupy similar or overlapping cellular footprints.

With this approach, wireless communications assets may be underutilized, surge "on-demand" capacity may be unattainable, and system-wide inefficient use of spectrum almost certainly results.

Demand for capacity is increasing for voice, multimedia and data. Unallocated spectrum is becoming scarce. The cost of procuring remaining spectrum is becoming prohibitive. In an effort to increase capacity, cellular footprints are becoming smaller, increasing co-channel interference, and dictating the use of computationally extensive signal processing to mitigate this interference. Finally, locations for constructing new wireless communication cells are becoming harder to obtain, especially within heavily populated areas. Governmental restrictions also inhibit or increase the time required for a new wireless service provider or tower provider to construct new wireless communication cells. This complex service provider environment is occurring while wireless service providers struggle to maintain "ARPU," average revenue per user, while consumer wireless service packages are being reduced in price.

Accordingly, what is needed in the art is way to make more efficient use of deployed wireless communication assets and more flexibly utilize spectrum across the aggregate of wireless service providers.

### SUMMARY OF THE INVENTION

To address the above-discussed deficiencies of the prior art, the present invention provides, for use with a wireless communication cell having at least one aperture array, a resource brokering system and a method of brokering wireless communication resources. In one embodiment, the resource brokering system includes a virtual sector broker configured to generate, in response to a resource request, an allocation request based on available wireless communication resources of the wireless communication cell subjected to a brokering process and an internal policy broker database associated with the virtual sector broker. The resource brokering system further includes a virtual sector formation unit configured to employ the at least one aperture array to provide dynamic virtual sectorization of the available wireless communication resources in response to the allocation request.

For purposes of the present invention, the phrase "configured to" means that the device, the system or the subsystem includes the necessary software, hardware, firmware or a combination thereof to accomplish the stated task or functionality. The phrase "virtual sectorization" means performing sectorization of the wireless communication cell that is specific to each user or given use, such that each user views the wireless communication cell as wholly his own. The phrase "wireless communication resources" means one or more of the resources associated with transmission and reception of wireless communication via a wireless communication cell that includes at least one aperture array. The wireless communication resources may include a spectrum and modulation code. In another embodiment, the wireless communication resources may include a beam pattern and a spatial directionality. In yet another embodiment, the wireless communication resources may include a time interval of resource allocation and power.

In another embodiment, the present invention provides a method of brokering resources of a wireless communication cell having at least one aperture array. The method includes generating, in response to a resource request, an allocation request based on available wireless communication resources of the wireless communication cell subjected to a brokering process. The method also includes employing the at least one aperture array to provide dynamic virtual sectorization of the available wireless communication resources in response to the allocation request.

The present invention also provides, in one embodiment, a wireless communication network that includes: (1) a plurality of wireless communication cells, each of the plurality of cells having at least one aperture array coupled to an optical network, (2) a plurality of wireless service provider systems coupled to the optical network and (3) a resource brokering system that receives resource requests from the plurality of wireless service providers.

The foregoing has outlined preferred and alternative features of the present invention so that those skilled in the art may better understand the detailed description of the invention that follows. Additional features of the invention will be described hereinafter that form the subject of the claims of the invention. Those skilled in the art should appreciate that they can readily use the disclosed conception and specific embodiment as a basis for designing or modifying other structures for carrying out the same purposes of the present invention. Those skilled in the art should also realize that such equivalent constructions do not depart from the spirit and scope of the invention.

### BRIEF DESCRIPTION OF THE DRAWINGS

For a more complete understanding of the present invention, reference is now made to the following descriptions taken in conjunction with the accompanying drawings, in which:
FIGURE 1 illustrates a block diagram of a centralized embodiment of a resource brokering system constructed according the principles of the present invention;
FIGURE 2 illustrates a block diagram of an alternate, partially distributed resource brokering system constructed according the principles of the present invention;
FIGURE 3 illustrates a block diagram of an alternate, still further distributed resource brokering system constructed according the principles of the present invention; and
FIGURE 4 illustrates a diagram of representative information flow in the brokered system of either FIGUREs 1 or 2.

### DETAILED DESCRIPTION

Before turning to the FIGUREs, an overall description of a system architecture, communication architecture, brokered resources and broker algorithm will now be set forth in general terms. It should become apparent to those skilled in the pertinent art that the architecture of the present invention is readily able to scale from centralized embodiments to fully distributed embodiments.

The disclosed embodiments of the system and method may comprise some or all of the following functional elements: a virtual sector formation unit (VSFU), a virtual sector broker (VB), an array aperture (AA), a transport network (TN), a service provider basestation (SPB, or SPBᵢ for the i^{th} service provider) and a service provider broker agent (SPBA, or SPBAᵢ for the i^{th} service provider).

### Virtual Sector Formation Unit

The VSFU can employ at least one AA able to provide dynamic virtual sectorization of the available wireless communication resources in response to the allocation request. Typically a multi-element antenna array of some form is required to meet this requirement. Advanced techniques include the SAFIRE approach described elsewhere within this document. Techniques that require synchronized antenna operation among multiple cell sites may offer an opportunity for ensuring more efficient resource usage. (The latter technique requires extensive signal processing and extremely high speed transport network.)

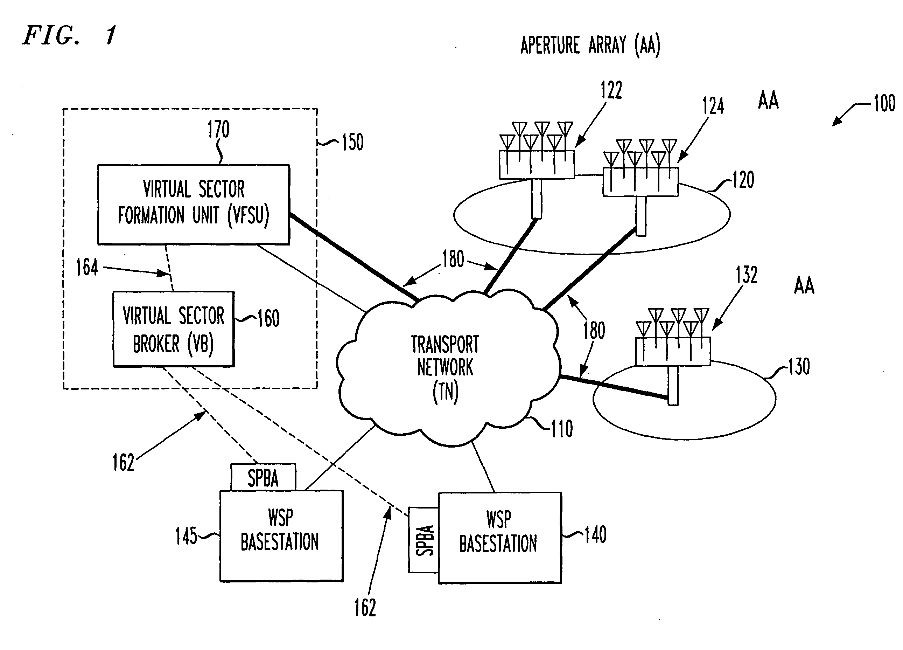

The VSFU has the capability to dynamically form fixed spatial directional beams of coverage, directional capability. "Directional" means that the aperture coverage favors a certain direction in space over others directions. For example, if a signal was sent to the directional aperture, the aperture will pick up (collect) RF energy in a certain preferred direction and will reject or be less sensitive to the RF energy in other directions. The VSFU in FIGURE 1, identified as 170, may dynamically assign and update beam patterns adaptively according to some constraint, objective function or optimization criteria, referred to as adaptive beam forming. This allows apertures to favor certain spatial areas or disfavor certain spatial areas to accomplish coverage goals and interferor rejection. (Also, one skilled in the pertinent art is familiar with beam patterns and how they are formed, received and processed.) In addition, the VSFU 170 employs this adaptive dynamic assignment capability in providing adaptive dynamic virtual sectorization.

In another embodiment, the VSFU (with support of one or more AA) incorporates the capability to exploit multi-path propagation by providing matched field processing. Matched field processing, *e.g.*, space time processing matching the corrugated propagating wavefront, may be viewed as a generalized, optimal form of non-line-of-sight beamforming. This technique requires multiple apertures, hence is referred to as a multiple-input, multiple-output (MIMO) or Bell Labs Advanced Space-Time algorithm (BLAST) (see, *e.g.*, Chizhik, *et al.,* "Keyholes, Correlations, and Capacities of Multielement Transmit and Receive Antennas," IEEE Transaction on Wireless Communications, Vol. 1, No. 2, April 2002, pp. 361-368). Using this or related techniques, spectral efficiency can be extended resulting in additional capacity, otherwise interfering multi-path mitigation can be accomplished, or potentially, power or signal-to-noise reduced with acceptable performance, resulting in lower self-interference and better coverage. Various other trade-offs with respect to wireless system performance may be attained leveraging this enhanced VFSU capability. The result is additional techniques to implement WSP coverage requirements.

The ability to steer communication signals dynamically, advantageously allows the resource brokering system 150 to accommodate resource requests economically throughout a wireless communication cell or a region. Another benefit is the ability to reroute all communication signals between wireless communication cells or between aperture arrays in case of a failure or disaster. Also, this allows the wireless service provider system to be free from dedicated wireless communication assets to specific cells. Further, the wireless communications asset assignment to specific cells may be allocated as needed over either predictable or spontaneous demand. For example, certain cells may be underutilized during the daytime, *e.g.*, a suburban area, while cells located in a city with many workers may be heavily utilized. As the workday ends, the cell usage may shift to the suburbs as commuters return home. The ability to provide arbitrary connection between wireless network assets such as WSP basestations or VSFU to specific cells allows resources to be dynamically allocated where and when needed.

Depending on the configuration of the system, e.g., the form of signal transported over the TN, the VSFU may perform IF or RF carrier up/down conversion. (As discussed previously, some AA such as SAFIRE have the integral capability of performing up/down conversion, relieving processing burden on the VFSU and traffic loading on the TN.) The WSP basestation often will provide a composite signal, representing many "channels" with spectral characteristics appropriate to the wireless system being implemented. These baseband signals destined for transmit must eventually be up-converted to the final carrier frequency for transmission by the AA. Similarly, the receive signals at the AA must be down-converted from the carrier frequency for processing by the VSFU and basestations. This processing may be done either at the basestation, VFSU, AA or a combination thereof.

### WSP Basestation and Related Network Elements

The WSP basestation represents the basestation itself, sometimes referred to as a BTS, but also other WSP support infrastructure elements such as radio node controller and other wireless network elements. The nomenclature of these wireless network elements various with the particular standard under consideration.

### Communications Paths in the Architecture, the TN

Dashed lines in FIGUREs 1 through 3 indicate communications paths that may or may not use the Transport Network (TN) to convey brokering control information elements.

Thin solid lines indicate the flow of baseband (or offset DC) information signals to and from the basestations associated with each WSP. The thick solid line connecting the VSFU to the AA, either through the TN or directly, represents the up-converted high rate RF or IF signals, either digital or RF, depending on the transport network implementation and signal form selected for transport.

### Variations in approaches to transport of the signals destined for the AA

The signals communicated between the VSFU and the AA may be (1) analog or digital, (2) baseband, intermediate frequency (IF), offset IF or radio frequency (RF), (3) transmit/receive symmetrical signal form or asymmetrical signal form.

Advanced Transport Network architectures, for example, transparent optical networks may be able to transport analog or digital signals at a variety of spectral occupancies (baseband or DC centered, DC offset, IF, RF) or various digital data rates (baseband, IF or RF digital rates), respectively. Advanced AA technology, *e.g.*, "SAFIRE," enables up/down conversion at the array elements themselves.

The determination of which signal form, spectral occupancy and symmetry attributes to employ depend on the TN and AA technical and financial attributes. When the VFSU to AA connection is dedicated and moderate cost, and the AA technology conventional, RF analog forms transported over dedicated fiber or copper may be appropriate. When the VFSU to AA connection is via a general purpose conventional TN (such as a high speed optical transport network), and advanced AA technology such as "SAFIRE" is applied, all-digital transport of the service provider basestation sector specific composite baseband or near-baseband signal is appropriate.

New, advanced array apertures are introduced that integrate tightly the aperture and RF front-end components in a scalable manner (with respect to, *e.g.*, power, size, steering, power combining or frequency.) This technology, referred to herein as "SAFIRE," allows the communication from VSFU to AA to be kept at a lower rate, *e.g.*, a "thin" line. For this "SAFIRE" case, the up/down conversion (transmit/receive) is done locally to the AA. In either case, both control information and bearer information (the information either to be transmitted or received) is synchronized appropriately.

In a typical cell cite, the antenna are allocated to one or more sectors. Each sector typically covers a portion of the angular cell area. For full coverage, the aggregate coverage of all sectors is 360°. For example, a six sector cell, covering an idealized circular footprint in a non-overlapping equal sized areas would imply, a 60° swath of coverage per sector. The AA technique may be applied to each such arbitrary sector. The AA may contain one antenna or a plurality of antennae thus forming the array aperture.

### Brokered Resources and Algorithms and the Role of the VB

The VB establishes a "market" for the brokering of communications assets among WSP. The VSFUs provide the processing necessary to implement the contract that results from the brokering process. For example, the brokered objects may include: beam pattern specification (for adaptive/dynamic sector coverage tailoring, gain shaping and "interferor," either intentional or unintentional, nulling), spectrum-on-demand (spot market for surge spectrum capacity demands, dynamic provisioning or excess spectrum capacity sales for revenue generation), channel access brokering (*e.g.*, access spreading codes or pilot code PRN sequences or any element of access capacity within a wireless access standard), or the implementation of multiple objective optimization schemes using the brokered resources and optionally including optimizations across a plurality of cell sites or sectors within a cell site.

The brokering process, in a related embodiment, may also include statistical determination of allocations of the available wireless communication resources over an entire region having a plurality of wireless communication cells. The statistical determination may also be based on a restriction of cost, time or coverage. For example, if a resource request is requesting that the VB in FIGURE 1, identified as 160, allocate available resources over the entire region in such a manner that statistically a certain cost is maintained or a certain amount of usage, such as peak availability, is maintained. This allows the use of a variety of wireless communication resources having different costs or capabilities while still maintaining a certain requested level of service over the entire region. Thus, the resource brokering system 150 in FIGURE 1 advantageously allows for a more efficient use of the wireless communication resources associated with the wireless communication cells and may also allow for additional revenue streams for owners of existing or underutilized systems.

Of course, however, the present invention is not limited to the wireless communication resources listed above. In other embodiments, the present invention may broker any type of resource associated with wireless communications and wireless communication cells.

The WSP may select to either employ an explicit bid strategy for specific resources or select predefined certified policies offered by the VB. (In the illustrated embodiment, these policies are maintained within the internal broker policy database.)

This architecture is applied across a plurality of wireless communications systems and wireless service methods. These wireless service methods may include 2G, 2.5G, 3G, 802.abgf or later-developed or proprietary standards. The AA, VB, VSFU and a method of, and algorithm for, brokering wireless communication resources form the key system elements with which the WSPᵢ interact. The WSPᵢ interact primarily, from a functional point of view, with the VB and use the WSPᵢ broker agent to do so.

In one embodiment, the system includes a VB configured to generate, in response to a resource request from a WSP, an allocation contract based on offered available wireless communication resources of the wireless communication cell subjected to a brokering process.

Identification of available resources to broker in an important aspect of the broker architecture. The VB also receives resource availability "offers" from a plethora of sources. These include: WSP, Towering Service Providers (TSP), future government/Department of Defense spot market resource availability provider (GRP), as a result of VFSU opportunistic measurements and other parties (ORP) with certified resources to broker.

The Communications Resource Offerors (*e.g.*, WSP, TSP, GRP, ORP) provide an indication of availability of resources to the VB (described previously) as a function of time, space and financial value, required bid policy and constraints or any combination thereof. A TSP may own, for the purposes of wireless communications resource supply to the brokered market, some of the resources described previously. The TSP provides availability of resources (described previously) as a function of time, space and financial value/required bid policy constraints.

In the future, it is possible that the government will provide communications resources on an interim or "spot" basis, rather than fully relinquishing military or set-aside spectrum to the commercial market. (Similarly, the government/DoD might "bid" on communications resources in extraordinary times.)

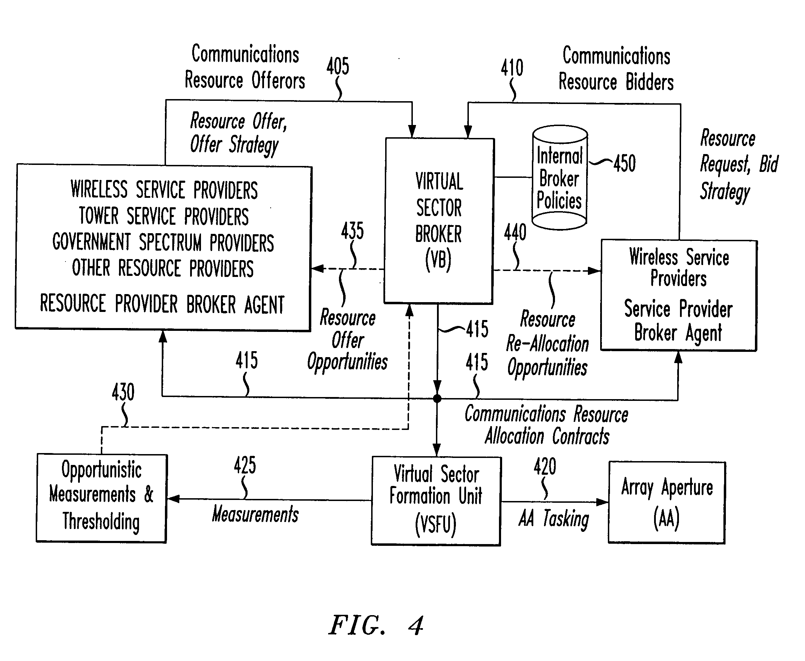

An Internal Broker Policy (IBP-DB)database shown in Figure 4, annotated as 450, is maintained with the brokering system architecture. This important database is loaded and modified only by a trusted party with appropriate certifications. Key security and information assurance infrastructure is included within the architecture to certify, authentic, and enforce the trust relationships that ensure the integrity of the database schema, its contents, the marketplace created and the brokering process. The IBP-DB forms a robust, hardened and certified object (structure and contents) in the overall broker architecture. It plays a key role in ensuring the establishment of a certified and fair marketplace for resource brokering. There are a plurality of possible robust implementations of the database itself and it's functional contents are described next. The contents of the DB are certified by the responsible party or regulatory body that establishes the formal expression of the policies.

The policies contained therein cover a range of areas relating to the brokering process. Policies relating to the following topics include, but are not limited to: market place establishment ground rules, certification of resource offerors and resource bidders, valid ranges of resources to be brokered, brokering process mandates and constraints, and database update mandates and constraints.

### Marketplace establishment ground rules

This includes certification and authentication procedures that the VB must implement to assure its permission to establish a brokered market place for communications resources. Also included in this category is the establishment of VSFUs, and their associated resources, that may be controlled by the particular VB. Further included in this category is the establishment of AAs, and their associated resources, that may be controlled by the particular VB and particular VFSU.

### Certification of resource offerors and resource bidders

This category includes certification and authentication that must be established with the VB in order to enable participation of each specific offeror and each specific bidder for every specific type of subject resource.

### Valid ranges of resources to be brokered dynamically

This category includes assertions of valid resources to be subject to the broker process, and specific valid subsets of the resources subject to brokering. One example would be a description of spectral swaths that are able to be brokered. Some spectrum may not be brokered at all for any number of reasons including, but not limited to, government ownership or policy with respect to the use of the particular spectral swath, international laws or policies, spectrum license contract constraints on spectrum use and brokering, some extraordinary situations that preclude brokering of some or all of a spectral resource, or some "known interferor" which makes the spectral regime unusable.

### Brokering process mandates and constraints

Brokering process mandates include examples such as: broker process auditing for record keeping, financial settlement and audit trail, or sequencing and timeliness of broker processing. Brokering process constraints include examples such as; offer or bid overflow selection policy, limitations on usage of certain collateral information to gain an unfair advantage for certain clients or client classes, or limitations on techniques that might result in manipulation of the established market place.

### Database update mandates and constraints

These policies are key to ensuring the integrity of the brokering system. They define the certification, authentication, approvals and encryption requirements associated with the update of the database schema and contents.

### VSFU supported opportunistic measurements in the brokering process

Measurements made by the VFSU may uncover opportunities for making resources available to mitigate either an existing or impending system resource usage inefficiency, system performance problem, or system operational challenge. These opportunities may be communicated to both the service provider or service provider community and the wireless resource offerors to determine their interest in providing resources into the brokering process to correct the existing or impending problematic situation - enabling provision of more robust wireless service. Other opportunistic measurements may indicate the need to reduce one type of resource utilization and instead offer another available type of resource for use. For example, detection of excess cross-channel or co-channel interference, might cause the execution of a "reasoning algorithm" that would suggest an alternative resource to "shed load" to, for example in this case, an additional spectrum allocation that might relieve the problem indicated by the opportunistic measurements. It is highly advantageous to correlate appropriate measurements to observed degradation of service as seen by the user, to establish detections algorithms and thresholds, and as a result, improve the overall user experience and quality of the communication service offered.

### The Service Provider Broker Agent and its role in Centralized and Distributed Broker System Embodiments

The SPBA is a WSP-specific interface to the VB. The WSP basestation represents the basestation itself, sometimes referred to as a BTS, but also other WSP support infrastructure elements such as radio node controller and other wireless network elements. The nomenclature of these wireless network elements various with the particular standard under consideration. In the centralized realization of the architecture, the SPBA exchanges resource offer and resource bid-related information with the VB. In the fully distributed realization, the distributed VB and the SPBA may be co-located, although the local internal information element exchange will often remain the same.

In this latter, fully distributed case, however, the external information element exchanges provide the necessary support for robust functioning of the distributed broker system. Also, various well-known methods for robust system design may be incorporated ensuring robust operation in the event of failures. Examples of these well-known techniques include hot-sparing, "n+m" system level redundancy, or local on-line redundancy. (*see, e.g.*, Siewiorek, *et al.,* "The Theory and Practice of Reliable System Design," Digital Press, Bedford, Massachusetts 01730, 1982, pp 63 - 175 and Ananda, *et al.,* "Distributed Computing Systems Concepts and Structures," IEEE Computer Society Press, ISBN 0-8186-1975-9, 1990, both incorporated in their entirety.)

A important aspect for the implementation of the distributed embodiments of the system is incorporation of a distributed coherence protocol for maintaining the resource state information coherently across the dVB. Well known protocols exist for ensuring the required coherence properties of the dVB state. These include techniques that apply atomic transactions, cooperating sequential process coordination, and cache coherency algorithms. (*see, e.g.*, Hoare, "Towards a Theory of Parallel Programming," Operating Systems Techniques, Academic Press, New York, 1972 and Tomasevic, "The cache coherence problem in shared-memory multiprocessors," ISBN 0-8186-4092-8, IEEE Computer Society Press, 1993, both incorporated in their entirety.)

With respect to the FIGUREs, illustrated are various aspects of the brokering system configuration, depicting the evolution from centralized strategies to distributed strategies and various usage of both networked and dedicated transport paths for the sector signals destined for the air interfaces. The major elements in the brokering system are introduced previously, for example, the VFSU, VB, TN, AA, SPBA, WSP basestation and other related wireless network elements and interfaces.

Dashed lines in FIGURES 1 through 3 indicate communications paths that may or may not use the TN to convey brokering control information elements. Thin solid lines indicate the flow of baseband (or offset DC) information signals to and from the basestations associated with each WSP. The thick solid line connecting the VSFU to the AA, either through the TN or directly, represents the up-converted high rate RF or IF signals, either digital or RF, depending on the transport network implementation and the form of signal transported.

FIGURE 1 shows a centralized VB 160 and VSFU 170. (Together, the VB and VSFU form the central elements of the brokering system 150, other network elements are found within typical wireless networks to provide other wireless network related functionality.) In the illustrated embodiment, the resource brokering system 150 includes a VB 160 and a VSFU 170. The VB 160 and VFSU 170 may be software, hardware, firmware or a combination thereof and embodied within a conventional or special purpose computer system or telecommunications equipment.

The VB exchanges information elements relating to the brokering process with the various SP SPBAs 145, 162. The SP SPBA participate in the brokering process on behalf of the owning Service or Resource Provider, for example a WSP or TSP, etc. These transactions use a standard information element ISA (Instruction Set Architecture, that is, the standard language of brokering process interactions). These information element exchanges may use the TN or another alternative network. The VB-SPBA 162 traffic generated is significantly below that associated with VSFU-AA 180 traffic load. The VSFU uses the TN to drive one or more cell sites 120, 130 and their respective sectors and AA 122, 124, 132. The TN is shown transporting high aggregate rate traffic representing all sectors and carrier stacks provided by the participating WSP 140. The WSP basestation-VFSU traffic flows correspond to the sectors and spectral stack-up of "carriers" supported by that particular basestation. The thickness of the line provides a notional interpretation of the associated network traffic. The actual configurations will dictate the actual network capacity needs.

The wireless communication network 100, in the illustrated embodiment, includes a plurality of wireless service provider systems 140, 145 with service provider brokering agents, SPBA, and a resource brokering system 150 containing a VFSU 170 and a VB 160. The WSP basestation (and related wireless network elements), VGSU, AA are coupled to the transport network 110 of sufficient capacity for transporting the user wireless signals. The VB, SPBA also need a method for transport of the control information elements in the broker architecture. This traffic, since its offered load is considerably lower than the VSFU, WSP basestations and AA load induced on the TN, may or may not be accommodated on the TN 110. If not, another lower capacity transport network may be used for the control traffic.

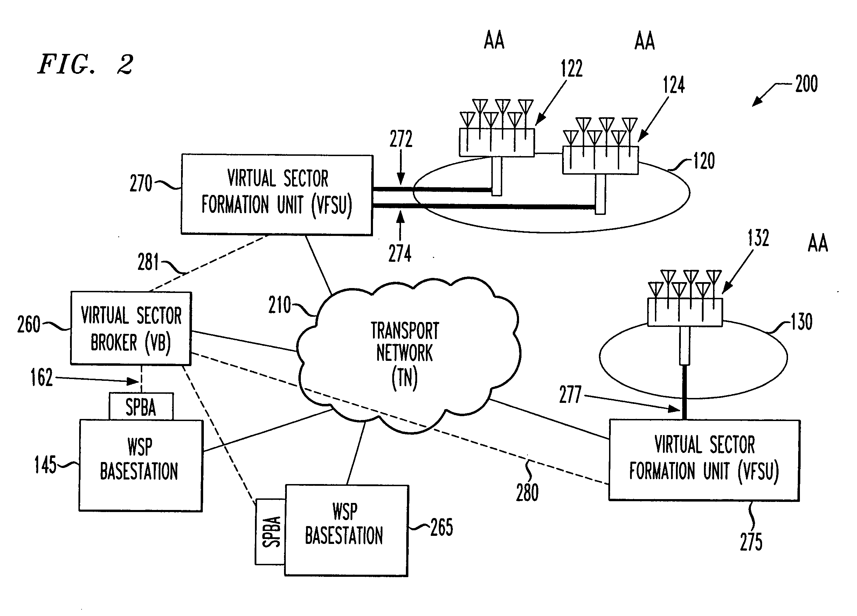

FIGURE 2 shows a centralized Virtual Sector Broker (VB) and distributed VFSU organization. The TN has both dedicated interconnects 272, 274, 277 and a network-style interconnect 210. The VB communicates necessary information to VSFU to implement contracted-for resource allocations. This information element exchange between VB and VFSU 280, 281 is shown as a dashed line.

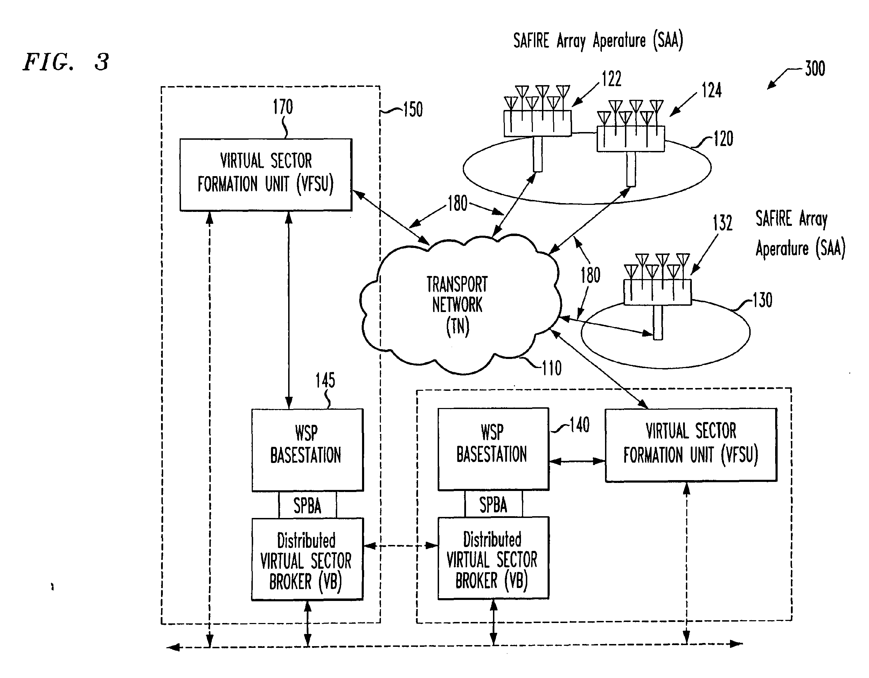

FIGURE 3 shows a distributed VB (dVB) and a distributed VFSU (dVFSU) organization. The dashed lines indicate the control information elements exchanged as part of the brokering process. For the brokering function, the SPBA-VB interface is maintained. An inter-dVB interface supporting the exchange of standard information elements necessary for the distributed VB (dVB) implementation is provided. Communications paths to enable standard dVB-dVFSU information element exchange is provided as well. It is noted that dVFSU resources are owned by an appropriate dVB and an infrastructure is provided to enforce this singular relationship. In other embodiments derived from FIGUREs 1 through 3, other methods are well within the broad scope of the present invention

Turning now to FIGURE 4, illustrated is a diagram of representative information flow in the resource brokering system depicted in FIGURES 1, 2 or 3. FIGURE 4 is a representative information flow in the brokered system architecture.

Two flow mechanisms are depicted. The first is WSP-initiated broker request based upon the availability of a communications resource offered to be brokered or the WSP need to bid for a needed communications resource. The second is VB-proactive based upon opportunistic measurements. Items shown in italics support information elements communication. Items shown with dashed line indicate the VB Proactive Brokering information exchanges. Items shown as a solid line indicate SP initiated brokering information exchanges.

As described above, italicized text indicates an information element exchange between the functional blocks shown. Dashed lines indicate the flow associated with VB Proactive information flow. Solid lines indicate WSP-initiated actions. Information control flow shown in the figure may be or may not be associated with the high capacity TN.

A provider of wireless resources into the brokering process communicates a resource offer and the offer strategy or constraints to be followed by the VB (represented by a line 405). Exemplary resources include spectrum, allocation interval and access codes/time slots or channels, as described previously. The offer strategy may indicate, for example, the generalized pricing policy for the resource and the time interval for which the pricing policy is valid. Providers of the communication resource may include: WSP, towering service providers, government spectrum providers, and other communication resource providers. The Resource Provider Broker Agent (RPBA) initiates the resource offer on the resource owner's behalf. The RPBA is provided by the resource owner or the owner's designee.

The VB similarly accepts resource requests and bid strategies from a service provider (service provider broker agent - SPBA)in need of a communications resource (represented by a line 410). The information element includes the resource request and the bid strategy to be applied to obtain the target resource. The WSP may indicate that the VB use a commonly known strategy, a wholly directed (proprietary) strategy or a combination thereof. The SPBA issues the request on behalf of the service provider in need of the target resource.

The VB uses internal broker policies (IBP) to match "buyers" to "sellers" in this communications resource virtual marketplace. The IBP may need to pass government scrutiny, or be dynamically evolved in an observable manner to the marketplace participants.

As a result of the brokering process, communications resource allocation contracts (CRAC) are established and communicated to the buyer, seller and provided to the appropriate VSFU for implementation (represented by a line 415). In addition to implementing the appropriate processing, the VSFU communicates the appropriate configuration to the target AA (represented by a line 420). The VB internal state is updated to reflect properly the resource allocation event.

The CRAC is forwarded to a "settlement system" for financial processing and record maintenance and auditing. These external system feeds are not shown explicitly in FIGURE 4.

In the VB proactive mode of operation, the VSFU performs measurements that, when given proper thresholds (so-called "thresholding"), indicate that a resource imbalance exists and may imply that user service quality is being effected (represented by a line 425) . The measurement and "threshold exceed" event are forwarded to the VB (represented by a line 430). Through a reasoning process, the VB determines remedial actions that may be suggested to service/resource providers. If a new resource is required, the VB provides an information element to the RPBA containing resource offer opportunities (represented by a line 435). If a resource reallocation opportunity exists to mediate the situation, a corresponding information element is sent to the SPBA (represented by a line 440). Situations may occur when both information elements are distributed. The service providers and resource providers are free to take action or not based upon the information element content. In the former case, the next steps to occur are the same as those identified in the SP initiated brokering case.

One skilled in the pertinent art should understand that both modes may be operationally concurrent, or may be undertaken sequentially in any order. One skilled in the art should also know that the present invention is not limited to processing only resource and allocation requests. In other embodiments, the present invention and method may perform additional functions in conjunction with the processing of the requests described above. Also, other embodiments of the present invention may have additional or fewer steps than described above.

The methods disclosed herein have been described and shown with reference to particular steps performed in a particular order, it will be understood that these steps may be combined, subdivided, or reordered to form an equivalent method without departing from the teachings of the present invention. Accordingly, unless specifically indicated herein, the order and or the grouping of the steps are not limitations of the present invention.

## Claims

1. A resource brokering system for use with a wireless communication cell having at least one aperture array, comprising:
a virtual sector broker configured to generate, in response to a resource request, an allocation request based on available wireless communication resources of said cell subjected to a brokering process;
an internal policy broker database associated with said virtual sector broker; and
a virtual sector formation unit configured to employ said at least one aperture array to provide dynamic virtual sectorization of said available wireless communication resources in response to said allocation request.

2. The resource brokering system as recited in Claim 1 wherein said available wireless communication resources include one selected from the group consisting of:
beam pattern specification,
spectrum-on-demand,
dynamic provisioning or excess spectrum capacity sales,
channel access brokering, and
multiple objective optimization schemes using said available wireless communication resources across a plurality of cell sites or sectors within a cell site.

3. The resource brokering system as recited in Claim 1 wherein said virtual sectorization includes substantially simultaneously forming dynamically assigned beam patterns.

4. The resource brokering system as recited in Claim 1 wherein said wireless communication resources are selected from the group consisting of:
a spectrum,
a code modulation,
a beam pattern,
a spatial directionality,
a power,
a time interval, and
jointly optimized combinations thereof.

5. The resource brokering system as recited in Claim 1 wherein said virtual sector formation unit is further configured to receive and send signals of various forms from at least one wireless service provider via a transport network and perform up/down conversions of said signal forms.

6. The resource brokering system as recited in Claim 1 wherein said wireless communication cell has at least two aperture arrays and said virtual sector formation unit is dynamically coupleable to said at least two aperture arrays via an optical network, said virtual sector formation unit further configured to employ said optical network to steer communication signals dynamically to different ones of said at least two aperture arrays in response to said allocation request.

7. The resource brokering system as recited in Claim 1 wherein said virtual sector broker is further configured to generate said allocation request based on said available wireless communication resources of a plurality of said wireless communication cells.

8. The resource brokering system as recited in Claim 1 wherein said resource brokering system is employed over a region having a plurality of wireless communication cells, said brokering process including deterministic and statistical determinations of allocations of said available wireless communication resources over said region based on a restriction of cost, time, usage or coverage.

9. A wireless communication network, comprising:
a plurality of wireless communication cells, each of said plurality of cells having at least one aperture array coupled to an optical network;
a plurality of wireless service provider systems coupled to said optical network; and
a resource brokering system that receives resource requests from said plurality of wireless service providers, including:
a virtual sector broker configured to generate, in response to a resource request, an allocation request based on available wireless communication resources of said cell subjected to a brokering process,
an internal policy broker database associated with said virtual sector broker,
a virtual sector formation unit configured to employ said at least one aperture array to provide dynamic virtual sectorization of said available wireless communication resources in response to said allocation request,
a per service provider broker agent,
a per resource provider broker agent,
a plurality of aperture array, and
opportunistic measurement functional unit.

10. The wireless communication network as recited in Claim 9 wherein said available wireless communication resources include one selected from the group consisting of:
beam pattern specification,
spectrum-on-demand,
dynamic provisioning or excess spectrum capacity sales,
channel access brokering, and
multiple objective optimization schemes using said available wireless communication resources across a plurality of cell sites or sectors within a cell site.
